# EUROPÄISCHE PATENTSCHRIFT

(11) **EP 1 582 285 B1**
(45) Veröffentlichungstag und Bekanntmachung des Hinweises auf die Patenterteilung: **24.09.2008**
(21) Anmeldenummer: 05004398.3
(22) Anmeldetag: 01.03.2005
(51) Int. Cl.: B23K 11/25

(54) **Verfahren zum elektrischen Widerstandsschweissen sowie zur Beurteilung der Qualität einer Schweissverbindung**
Method for resistance welding and for assessing the quality of a weld
Méthode de soudage par résistance et d'évalution de la qualité d'une soudure

(30) Priorität: 29.03.2004 DE 102004015704
(43) Veröffentlichungstag der Anmeldung: 05.10.2005
(73) Patentinhaber: Cosytronic Computer-System-Electronic GmbH, 57537 Wissen/Sieg (DE); MICOM Technologie Gesellschaft für Automation mbH & Co. KG, 52076 Aachen (DE)
(72) Erfinder: Heinz, Heribert, 57537 Wissen (DE); Rennau, Wolfram, Dr., 52076 Aachen (DE)
(74) Vertreter: Kohlmann, Kai

(56) Entgegenhaltungen:
- EP-A- 1 118 417
- EP-A- 1 291 113

## Beschreibung

Die Erfindung betrifft ein Verfahren zum elektrischen Widerstandsschweißen sowie zur Beurteilung der Qualität einer Schweißverbindung von mindestens zwei Blechteilen mittels einer Schweißvorrichtung mit gegeneinander beweglichen Elektroden, einer elektrisch angetriebenen Spindel zum Bewegen mindestens einer der beiden Elektroden, mit Mitteln zum Erzeugen des Schweißstromes und einem an der Schweißzange angeordneten Kraftsensor zur Erfassung eines Kraftistwertes zwischen den beiden Elektroden, einer Steuerung für die Schweißvorrichtung sowie einer Positionsregelung für die elektrisch angetriebenen Spindel, wobei die Federkonstante der Schweißvorrichtung bestimmt und in der Zangensteuerung gespeichert wird.

Das elektrische Widerstandsschweißen- auch Widerstandspressschweißen genannt- lässt sich gut automatisieren und wird in großem Umfang insbesondere in der Automobilindustrie zum Verbinden von mindestens zwei Blechen angewendet.

Die zu verschweißenden Bleche werden zwischen zwei Elektroden zusammengepresst, die vorzugsweise je eine Schweißkappe mit einer genau definierten Geometrie als Kontaktfläche aufweisen. Die Kraft für die Schließbewegung der insbesondere an Elektrodenarmen befestigten Elektroden erzeugen beispielsweise elektrisch angetriebene Motorspindeln oder aber auch pneumatische Zylinder. Ferner sind Schweißpressen bekannt, bei denen mindestens eine Elektrode relativ zu der gegenüberliegenden Elektrode beweglich angeordnet ist.

Der Schweißstrom an der Kontaktstelle zwischen den zusammengepressten Blechen bewirkt eine Temperaturerhöhung, die zur Aufschmelzung der beiden Blechteile bis maximal zu deren Oberfläche führt. Das gemeinsame Schweißbad an der Kontaktstelle wird Schweißlinse genannt. Eine an die Aufschmelzung anschließende Abkühlung unter Wirkung von Presskräften führt zu einer Erstarrung der Schweißlinse, so dass die Bleche mechanisch miteinander verbunden sind.

Aus der EP 0594 086 B1 ist eine gattungsfremde pneumatische betriebene Schweißzange bekannt, bei der auf einem Elektrodenarm ein Kraftsensor angeordnet ist. Aufgrund der gemessenen Elektrodenkraft soll die Qualität des Schweißpunktes beurteilt und entschieden werden, ob ggf. ein weiterer, benachbarter Schweißpunkt erforderlich ist. Der Kraftsensor ist ein konstruktiv aufwendiger optischer Sensor, dessen Wirkungsweise darauf beruht, dass die über einen Lichtweg im Sensorelement übertragene Lichtmenge eine Funktion der Verformung des den Lichtweg aufweisenden Teils des Sensors ist. Der Sensor ist über Lichtleiter mit einer opto-elektronischen Einheit verbunden, die für jeden Schweißpunkt die Beurteilung der Qualität und die sich daraus ergebenden Steuermaßnahmen durchführt.

Aus der EP 0344 034 B1 ist eine Schweißzange zum elektrischen Widerstandsschweißen mit an zwei Elektrodenarmen befestigten Elektroden bekannt, wobei jeder Elektrodenarm endseitig von einer Elektrodenarmhalterung aufgenommen wird. Ein piezoelektrisches Sensorelement dient zur Erfassung eines Kraftistwertes zwischen den beiden Elektroden, wobei das Sensorelement an einer der nicht von dem Schweißstrom durchflossenen Elektrodenarmhalterungen angeordnet ist. Die Kraftmessung während des Schweißens dient dem Ziel, die Dauer jedes Schweißvorgangs zu optimieren, insbesondere zu verkürzen.

Aus der EP 1 291 113 A1 ist ein Verfahren zur Beurteilung der Qualität einer Schweißverbindung von mindestens zwei Blechteilen mittels einer Schweißvorrichtung mit gegeneinander beweglichen Elektroden bekannt, bei dem in der Schweißphase der Kraftistwert von einer Zangensteuerung ausgewertet wird. Aus dieser Auswertung können Rückschlüsse auf die Qualität der Schweißverbindung gezogen werden. Für die Auswertung ist es allerdings erforderlich, dass zuvor die Zangensteuerung nach Erreichen eines Kraftgrenzwertes zwischen den Elektroden von einer Positionsregelung auf eine Drehzahlregelung umgeschaltet wird und der Antriebsstrom der Spindel auf einen Stromgrenzwert unterhalb des maximal möglichen Antriebsstroms begrenzt wird.

Ein wesentliches Beurteilungsmerkmal für die Schweißqualität beim elektrischen Widerstandsschweißen ist die Eindringtiefe der Schweißelektroden bzw. der sie umgebenden Elektrodenkappen. Die Eindringtiefe ist die Differenz der Abstände der Elektroden vor, während und nach der Schweißung. Eine ordnungsgemäß durchgeführte Widerstandsschweißung führt regelmäßig zu einer messbaren Eindellung an den Kontaktstellen zwischen den Elektroden und den Blechoberflächen. Durch Erfassen der Eindringtiefe während und nach eines jeden Schweißvorgangs und einem Vergleich mit vorgegebenen Parametern lässt sich daher die Qualität.einer Verschweißung ermitteln.

Die EP-A-1 118417 offenbart ein Verfahren zur Bestimmung der Bewegung der Elektroden einer Vorrichtung zum elektrischen Widerstandsschweißen auf Grund des Verhaltens der Schweißlinse. Der EP-A-1 118417 liegt die Erkenntnis zugrunde, dass die die Elektroden auseinanderdrückende Kraft bei der Expansion der Schweißlinse teilweise durch eine Verbiegung des Schweißarmes absorbiert wird. Aus diesem Grunde kann der Elektrodenabstand nicht exakt ermittelt werden und infolgedessen die Qualität der Schweißverbindung nicht festgestellt werden. Um ein Verfahren und eine Vorrichtung vorzuschlagen, mit der sich der Elektrodenabstand akkurat ermitteln lässt und infolgedessen eine bessere Beurteilung der Qualität der Schweißverbindung erlaubt, wird vorgeschlagen, die Federkonstante der Schweißvorrichtung zu bestimmen. Die Federkonstante wird bestimmt, indem mindestens ein erster und ein zweiter Kraftwert zwischen den Elektroden und die zu diesen beiden Werten zugehörigen Motorpositionswerte aufgenommen werden. Durch Regression wird die Federkonstante ermittelt. Diese Federkonstante wird jedoch lediglich dazu verwendet, um die tatsächliche Bewegung der Elektroden infolge Expansion oder Kontraktion der Schweißlinse zu ermitteln. Diese Ermittlung erfolgt, in dem zu der Antriebsbewegung, die mit einem Encoder des Antriebs erfasst wird, der unter Berücksichtigung der Federkonstante ermittelte Verbiegungsbetrag hinzuaddiert wird. Der Verbiegungsbetrag selbst wird ermittelt, in dem die gemessene Presskraft mit der Federkonstante der Schweißvorrichtung multipliziert wird. Diese Verfahren ist nicht geeignet den Kraftistwert zwischen den Elektroden während der Verschweißung nahezu konstant zu halten.

Ausgehend von diesem Stand der Technik liegt der Erfindung die Aufgabe zu Grunde, ein Verfahren zur Beurteilung der Qualität einer Schweißverbindung vorzuschlagen, dass eine verbesserte Verfahrensführung aufweist und eine erweiterte Beurteilung der Qualität der Schweißverbindung ermöglicht.

Insbesondere soll neben einem ausreichenden Eindringen der Elektroden das Erkennen von speziellen Prozessfehlern, wie insbesondere ein die Haltbarkeit der Verschweißung beeinträchtiger Luftspalt oder Nebenschluss, eine Spritzerbildung sowie eine unzureichende Schweißlinsenerwärmung mit dem Verfahren erkannt werden.

Diese Aufgabe wird bei einem Verfahren der eingangs erwähnten Art dadurch gelöst, dass
- der Steuerung ein Wert für eine Sollkraft zwischen den beiden Elektroden während der Schweißphase vorgegeben wird,
- die erfassten Werte der Istkraft zwischen den beiden Elektroden fortlaufend mit dem Wert für die Sollkraft von der Steuerung verglichen werden
- die Steuerung unter Berücksichtigung der Federkonstante aus Abweichungen zwischen den fortlaufend erfassten Werten für die Istkraft zu dem Wert für die Sollkraft einen Wert für eine geänderte Position der Spindel berechnet, um den Wert der Istkraft auf den Wert der Sollkraft als Führungsgröße nachzuregeln
- die berechneten Werte der geänderten Position als Führungsgröße der Positionsregelung für die zu regelnden Positionsistwerte an der Spindel dienen
- und die berechneten Werte der geänderten Position oder die Positionsistwerte, nachfolgend als Positionswerte bezeichnet, zur Beurteilung der Qualität der Schweißverbindung ausgewertet werden.

Das erfindungsgemäße Verfahren erlaubt eine Vielzahl von Auswertungen zur Qualität der Schweißverbindung durch Auswerten der Positionswerte der Spindel. Die Auswertung der Positionswerte erfolgt mit statistischen Methoden und Verfahren zur Mustererkennung.

Wesentlich für das erfindungsgemäße Verfahren ist, dass der Zangensteuerung die Federkonstante der Schweißvorrichtung bekannt ist, um den Wert der Istkraft zwischen den Elektroden auf den Wert einer Sollkraft nachregeln zu können. Die Erfindung trägt dem Wunsch in der Schweißtechnik Rechnung, den Kraftistwert zwischen den Elektroden während der Verschweißung nahezu konstant zu halten. Die Federkonstante wird vorzugsweise gemäß den Merkmalen des Anspruchs 2 bestimmt.

Bevorzugte Auswerteverfahren zur Ermittlung des Eindringens der Elektroden, zum Erkennen einer Spritzerbildung sowie einer unzureichenden Schweißlinsenerwärmung ergibt sich aus den Merkmalen der Ansprüche 3-6 und 8, wobei zum Erkennen einer Spritzerbildung der zeitliche Verlauf des Kraftistwertes analysiert werden muss.

Durch eine Kombination der verschieden Auswerteverfahren erhöht sich die Auswertequalität.

Eine Erkennung eines Luftspaltes oder Nebenschlusses ist in einer Ausgestaltung des Verfahrens nach Anspruch 7 möglich.

Weitere Vorteile und Wirkungen der Erfindung ergeben sich aus der nachfolgenden Beschreibung der Figuren und Diagramme. Es zeigen:
- Figur 1: eine Schweißzange zum Durchführen des erfindungsgemäßen Verfahrens einschließlich einer schematischen Darstellung von deren Steuerung;
- Figur 2: Ein Kraft-Zeit-Diagramm zur Veranschaulichung der Schließphase;
- Figur 3: Eine Darstellung der Positionsistwerte der Spindel über die Schweißphase zur Auswertung der Eindringtiefe
- Figur 4: Eine Darstellung der Positionsistwerte der Spindel über die Schweißphase zur Auswertung der Schweißlinsenerwärmung
- Figur 5: Eine Darstellung der Kraftistwerte zwischen den Elektroden über die Schweißphase zur Erkennung der Spritzerbildung

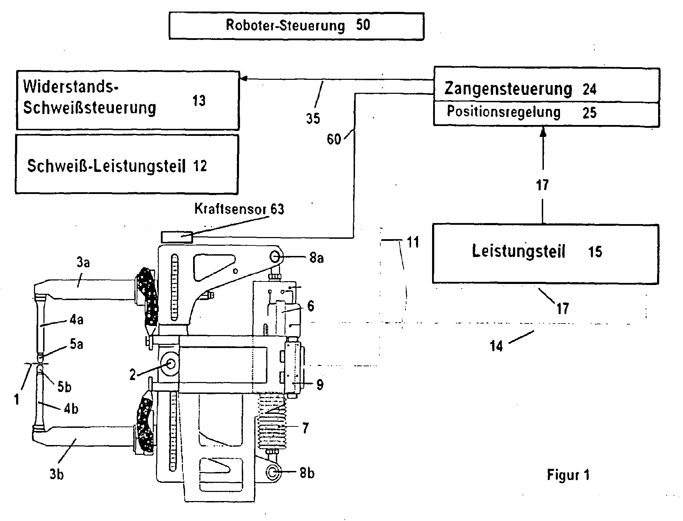

Figur 1 zeigt eine Schweißzange zum Verbinden von Blechteilen 1 mit zwei um einen gemeinsamen Drehpunkt 2 schwenkbaren Elektrodenarmen 3 a, b. An den äußeren Enden der Elektrodenarme 3 a, b sind Stiftelektroden 4a,b angeordnet, die stirnseitig an der Kontaktstelle mit den Blechteilen 1 von Elektrodenkappen 5a, 5b umgeben werden. An den gegenüberliegenden Enden sind die Elektrodenarme 3a, 3b in Elektrodenarmhalterungen gesteckt und mittels Schrauben festgeklemmt.

Der Abstand der Elektroden 4 a, b lässt sich mit einer von einem Elektromotor 6, insbesondere einem Servomotor, angetriebenen Spindel 7 verändern, in dem sie den Abstand zwischen an den gegenüberliegenden Enden der Elektrodenarme 3 a, b angeordneten Gelenken 8a, 8b verändert.

Der Schweißstrom fließt von einen Schweißtransformator 9 durch die Elektrodenarme 3 a, b zu den Elektroden 4 a, b. Der Schweißtransformator 9 ist über ein Schweißstromkabel 11 mit einem von einer Widerstandsschweißsteuerung 13 gesteuerten Schweißleistungsteil 12 verbunden.

Ein im Kraftfluss zwischen Spindel und Elektroden, beispielsweise an der Elektrodenarmhalterung angeordneter Kraftsensor 63 liefert als Ausgangssignal eine elektrische Ladung, die direkt proportional der gemessenen Dehnung ist. Der Kraftsensor 63 ist zunächst zu kalibrieren, so dass er unabhängig vom Ort seiner Montage zutreffende Kraftistwerte zwischen den Elektroden liefert. Dies wird in an sich bekannter Weise mittels eines geeichten Referenz-Kraftsensors durchgeführt, der unmittelbar die Kraft zwischen den Elektroden 4a, 4b erfasst. In den Kraftsensor 63 ist ein in der Figur 1 nicht dargestellter Verstärker für die elektrische Ladung integriert, der die Änderung der elektrischen Ladung in ein Spannungssignal, den Kraftistwert 60 (Figur 1), wandelt, und über ein Messkabel an eine Zangensteuerung 24 überträgt.

Der Elektromotor 6 für die Bewegung der Elektrodenarme 3a,3b ist über ein Motorkabel 14 mit einem handelsüblichen Leistungsteil 15 für den Antrieb von Schweißzangen verbunden. Das Leistungsteil ist in an sich bekannter Weise mit einer Zangensteuerung 24 mit integrierter Positionsregelung 25 verbunden.

Der Zangen- und der Widerstandsschweiß-Steuerung (24, 13) ist eine Roboter-Steuerung (50) vorgeordnet. Die Signale zwischen der Robotersteuerung (50) einerseits und der Zangensteuerung (24) und Widerstandsschweißsteuerung (13) andererseits werden über ein Interface übertragen.

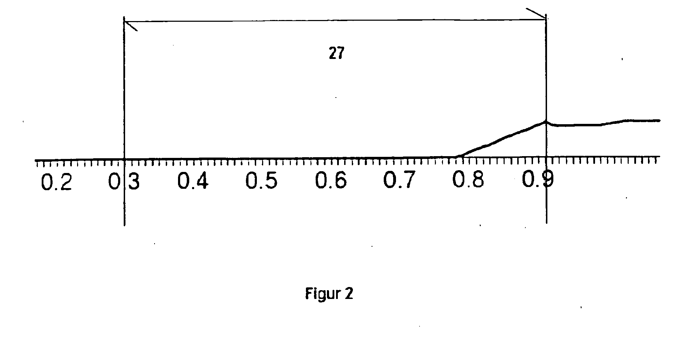

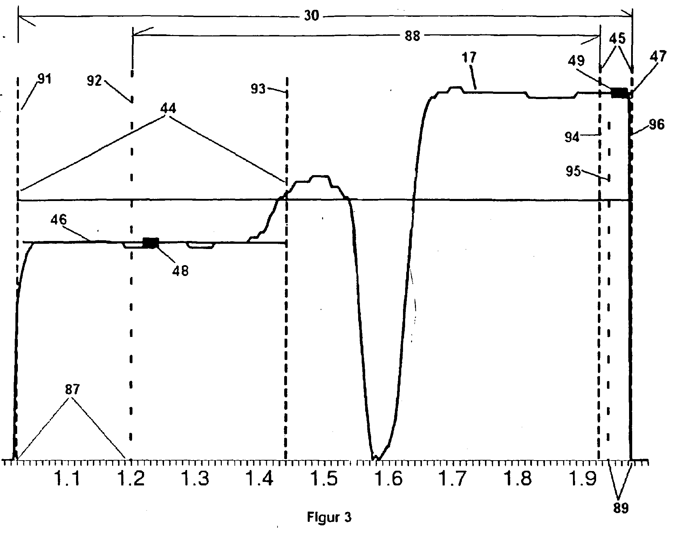

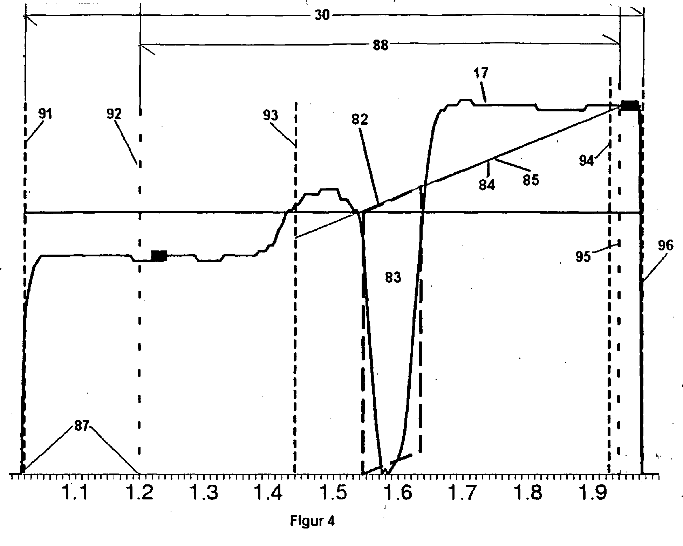

Der Ablauf für das Setzen eines Schweißpunktes mit der beschriebenen Schweißzange gliedert sich in eine Schließphase 27 (vgl. Figur 2) und eine Schweißphase 30. Die Schweißphase 30 untergliedert sich in eine Vorpresszeit 87, die Schweißzeit 88 und die Nachpresszeit 89(vgl. Fig.3,4). Der Schweißstrom fließt lediglich während der Schweißzeit 88, wobei der Stromfluss während der Schweißzeit unterbrochen werden kann. Während der Vorpress- und Nachpresszeit werden die Elektroden gegen die zu verschweißenden Bleche gedrückt, ohne dass ein Schweißstrom fließt. Die unterschiedlichen Abschnitte der Schweißphase sind in Figuren 3,4 durch die vertikalen gestrichelten Linien 91 bis 96 gekennzeichnet. Der Zangensteuerung wird ein Wert für eine Sollkraft zwischen den beiden Elektroden 4a, 4b während der Schweißphase vorgegeben. Dieser Wert hängt von der jeweiligen Schweißaufgabe ab und beruht auf Erfahrungswerten, die den Fachleuten bekannt sind.

### A. Schließphase (27):

In der Schließphase 27 berühren die Elektroden nach etwa 0,79 sec die zu verschweißenden Bleche wie dies aus Figur 2 ersichtlich ist. Anschließend baut sich die Kraft zwischen den Elektroden 4a,4b auf, wie dies aus dem Anstieg der Istkraft zwischen den Elektroden im Diagramm in Figur 2 erkennbar ist. Spätestens ab diesem Zeitpunkt wird der Kraftistwert 60 und die Positionsistwert 17 mit hoher Genauigkeit fortlaufend erfasst und in der Zangensteuerung 24 gespeichert.

Die Schließphase kann auch dazu genutzt werden, um die Federkonstante der Schweißvorrichtung zu bestimmen und in der Zangensteuerung zu speichern. Hierdurch kann Taktzeit gespart werden. Nach Schließen beider Elektroden, also wenn sich die beiden Elektroden nach 0,79 sec berühren, jedoch vor Beginn der Schweißphase 30, wird die Istkraft 60 zwischen den beiden Elektroden 4a,b erhöht. Ein erster Wert der Istkraft, z.B. in Höhe von 50 % der vorgegebenen Sollkraft, und der zu diesem ersten Wert der Istkraft zugehörige Positionsistwert der Spindel wird erfasst und gespeichert. Anschließend wird mindestens ein weiterer, von dem ersten Wert verschiedener Wert der Istkraft zwischen den Elektroden und der zu diesem weiteren Wert zugehörige Positionsistwert 17 der Spindel erfasst und gespeichert. Dieser Istkraftwert 60 kann beispielsweise dem Wert der vorgegebenen Sollkraft entsprechen, jedoch auch ein geringerer Wert von beispielsweise 80 % der Sollkraft sein.

Die beiden Wertepaare aus erfasster Istkraft und zugehörigem Positionsistwert können jedoch auch zeitgesteuert ermittelt werden, indem kurz nach Berührung der Elektroden mit den Blechen, z.B. nach 0,85 sec ein erstes Wertepaar erfasst wird und kurze Zeit später, beispielsweise nach 0,9 sec (vgl Fig 2) ein zweites Wertepaar erfasst wird.

Aus den beiden Wertepaaren der Kraftistwerte 60 und dem dazugehörigen Positionsistwert 17 wird nun die Federkonstante der Schweißzange ermittelt. Die Rückstellkraft ist F = -D * x, wobei D für die Federkonstante und x für den Verformungsweg steht. Angewendet auf die vorliegende Schweißzange geht die Rückstellkraft von den Elektroden 4a,b aus und entspricht daher der Differenz der beiden gemessenen Kraftistwerte 60. Der Verformungsweg x ist die Differenz zwischen den beiden erfassten Positionsistwerten 17 an der Spindel 7. Als Ergebnis erhält man die Federkonstante der Schweißzange, die in der Zangensteuerung 24 zumindest bis zu einer erneuten Bestimmung der Federkonstanten der Schweißvorrichtung gespeichert wird.

Abweichend von der vorstehend beschriebenen Ermittlung der Federkonstante, kann diese vielfach auch aus Tabellen des Zangenherstellers entnommen werden und in die Zangensteuerung 24 eingegeben werden. Außerdem kann die Federkonstante empirisch ermittelt werden.

Mit Erreichen der Sollkraft und nach Abschluss der Schließphase überträgt die Zangensteuerung 24 ein Startsignal 35, beispielsweise einen aktiven 24 Volt Pegel, an die Widerstandsschweißsteuerung 13, die den Schweißstrom für den Schweißvorgang nach einer programmierten Vorpresszeit 87 auslöst.

### B. Schweißphase (30)

Die Widerstandsschweißsteuerung 13 erzeugt über das SchweißLeistungsteil 12 und den Schweißtransformator 9 einen Stromfluss zwischen den beiden Elektrodenkappen 5a, 5b durch die dazwischen befindlichen Blechteile 1.

Die beiden Elektrodenkappen 5a, 5b pressen die Blechteile 1 zusammen, wodurch das nun weiche und/oder flüssige Material zunächst aufgeweitet und anschließend deformiert, komprimiert und/oder zur Seite gedrückt wird, so dass sich die beiden Elektrodenkappen 5a, 5b zunächst voneinander entfernen und anschließend annähern ("Eindringen"). Dieses Aufweiten bzw. Annähern der beiden Elektrodenkappen 5a, 5b bewirkt eine Belastung bzw. Kraftentlastung der Elektrodenarme 3a, 3b und daraus resultierend eine Änderung des gemessenen Kraftistwertes 60.

In festen Zeitabständen von beispielsweise 10 ms werden die aktuell erfassten Kraftistwerte 60 zwischen den beiden Elektroden 4 a, b mit dem Wert für die Sollkraft von der Zangensteuerung 24 verglichen.

Die Zangensteuerung berechnet unter Berücksichtigung der zuvor bestimmten Federkonstante aus Abweichungen zwischen den fortlaufend erfassten Werten für die Istkraft zu dem Wert für die Sollkraft einen Wert für eine geänderte Position der Spindel 7, um den Wert der Istkraft 60 auf den Wert der Sollkraft als Führungsgröße nachzuregeln. Diese Regelung gewährleistet, dass die Abweichung des Kraftistwertes 60 zwischen den Elektroden zu dem für die jeweilige Verschweißung vorgegebenen Kraftsollwert laufend minimiert wird. Hierdurch ergibt sich eine annähernd konstante Kraft zwischen den Elektroden während der Schweißphase (30).

Die berechneten Werte der geänderten Position dienen als Führungsgröße der Positionsregelung 25 für die zu regelnden Positionsistwerte 17 an der Spindel 7.

Die in der Zangensteuerung 24 gespeicherten Positionsistwerte 17, die für die Praxis mit den berechneten Werten der geänderten Position gleichgesetzt werden können, werden zur Beurteilung der Qualität der Schweißverbindung ausgewertet. Selbstverständlich können im Rahmen der Erfindung, auch die berechneten Werte der geänderten Positionen ausgewertet werden.

Die Positionsistwerte 17 können mit einer sehr hohen Auflösung erfasst werden. Durch die ständige Nachregelung der Istkraft auf den gewünschten Sollwert der Kraft zwischen den Elektroden als Führungsgröße, also durch das Konstanthalten des Sensorsignals des Kraftsensors 63, spiegeln sich die Änderungen der Elektrodenabstände in den Änderungen der Spindelposition, sei es dem Positionsistwert oder den berechneten Werten, wieder. Da die Elektrodenbewegungen Aussagen über die Qualität der Schweißverbindung erlauben, wie beispielsweise das Eindringen der Elektroden, können durch Auswerten der Spindelposition während der Schweißphase zuverlässige Aussagen über die Qualität der Verschweißung getroffen werden.

### C. Auswertung in der Schweißphase (30)

Nachfolgend wird die Auswertung der Positionsistwerte anhand von Figur 3 für das Qualitätskriterium **"Eindringtiefe der Elektroden"** näher erläutert:

Während der Schweißzeit 88 (zwischen Linien 92 und 95) liegt häufig noch keine auswertbare Änderung der Spindelposition hinsichtlich der Eindringtiefe der Elektroden 4a,b vor, weil sich die Elektroden 4a,b erst nach dem Abschalten des Schweißstromes und dem Abkühlen des Schweißgutes wieder aufeinander zu bewegen, so dass erst dann ein Eindringen der Elektroden feststellbar ist. Aus diesem Grund wird die Nachpresszeit 89 (zwischen Linien 95 und 96) der Schweißphase in die Auswertung mit einbezogen.

Durch eine Auswertung des Spindelpositionsistwertes 17 über die Schweißphase 30 (Figur 3) ist eine Erkennung der Eindringtiefe (typisch sind 0.100 mm) der Elektroden 4a,b möglich. Ein Ausbleiben einer Änderung der Spindelposition 17 zum Ende der Schweißphase zeigt eindeutig einen fehlerhafte Verschweißung, beispielsweise aufgrund eines Nebenschlusses. Überschreitet die gemessene Eindringtiefe einen festgelegten unteren Grenzwert, besagt dies, dass die Elektroden 4a,b tief genug eingedrungen sind, so dass mit hoher Wahrscheinlichkeit eine ordnungsgemäße Verschweißung vorliegt.

Es wird ein Referenzbereich 44 der erfassten Positionsistwerte innerhalb der Schweißphase festgelegt. Der Referenzbereich 44 erstreckt sich über die gesamte Vorpresszeit und etwa 1/3 der Schweißzeit (bis zur Linie 93). Außerdem wird ein hinterer Messbereich 45 (zwischen den Linien 94 und 96) festgelegt, der beispielsweise kurz vor Beendigung der Schweißzeit 88 beginnt und mit Ablauf der Nachpresszeit endet.

Nun wird für beide Bereiche 44, 45 je eine lineare Regression zwischen den Positionswerten und der Zeit berechnet, die jeweils eine Geradengleichung für den Referenz 44- und den Messbereich 45 ergibt. Die berechneten Geraden 46, 47 sind in Figur 3 ebenfalls dargestellt. Die durch die Mitte der Geraden 46, 47 definierten Schwerpunkte 48, 49 für den Referenz 44 - und Messbereich 45 werden bestimmt und die Positionsdifferenz zwischen den Schwerpunkten berechnet. Die Differenz entspricht der gesuchten Eindringtiefe.

### D. Zusätzliche Auswertungen

Die Auswertung der Positionswerte und der Kraftistwerte während der Schweißphase 30 erlaubt darüber hinaus die Erkennung eines Luftspaltes, von Spritzern und Nebenschluss.

Figur 4 verdeutlich, wie aus den Positionswerten während der Schweißphase eine SLE-Maßzahl für die Schweißlinsenerwärmung 83 berechnet und mit einem Grenzwert verglichen wird. Wenn neben einem ausreichendes Eindringen der Elektroden auch die Schweißlinsenerwärmung in einem definierten Bereich liegt, kann mit noch höherer Genauigkeit das Vorliegen einer ordnungsgemäßen Verschweißung erkant werden. Die Schweißlinsenerwärmung geht mit einer kurzfristigen Abstandsvergrößerung zwischen den Elektroden 4a,b einher.

Damit verbunden steigt der Kraftistwert zwischen den Elektroden 4a,b, den der Kraftsensor 63 fortlaufend erfasst. Die Änderung des Kraftistwertes 60 zieht während der Schweißphase erfindungsgemäß eine Positionsänderung nach sich, um den Kraftistwert wieder auf den Wert der vorgegebenen Sollkraft nachzuregeln. Folglich zeigt sich ein korrekte Schweißlinsenerwärmung als charakteristischer Ausschlag in der Kurve der Positionswerte in der zweiten Hälfte der Schweißzeit. Ein vergleichbar aussehender Ausschlag in der ersten Hälfte der Schweißzeit wird im Rahmen der Auswertung nicht berücksichtigt.

Zunächst wird zumindest in der zweiten Hälfte der Schweißzeit eine lineare Regression zwischen den Positionswerten und der Zeit berechnet. Im Ausführungsbeispiel wurde die lineare Regression beginnend nach Ablauf 1/3 der Schweißzeit bis zum Abschluss der Schweißzeit 88 berechnet. Die zeitlichen Grenzen für die Berechnung der Regressionsgeraden 82 sind in Figur 4 durch die gestrichelten Linien 93 und 95 gekennzeichnet. Die SLE-Maßzahl ist definiert als die Fläche 83 zwischen der Regressionsgeraden und dem charakteristischen Ausschlag der Kurve der Positionswerte 17. Der charakteristische Ausschlag der Kurve kann abhängig von der Schweißaufgabe variieren und muss empirisch für die jeweilige Schweißaufgabe ermittelt werden. Ist die Form des charakteristische Ausschlags einmal ermittelt, wird er im Rahmen der erfindungsgemäßen Auswertung der Positionswerte mittels an sich bekannter Mustererkennungsverfahren bei jeder Verschweißung innerhalb der zweiten Hälfte der Schweißzeit aufgefunden und die SLE-Maßzahl ermittelt. Liegt die SLE-Maßzahl innerhalb bestimmter Grenzwerte kann hieraus auf eine ausreichende Schweißlinsenerwärmung geschlossen werden.

Die Steigung 84 der Regressionsgeraden nach Figur 4 und das aus der linearen Regression errechnete Bestimmtheitsmaß 85 kann ebenfalls in die Auswertung mit einbezogen werden.

Bestimmte, für die jeweilige Schweißaufgabe empirisch zu ermittelnde Kombinationen aus der Eindringtiefe 51, der SLE-Maßzahl 83 und der Steigung 84 sowie dem Bestimmtheitsmaß 85 der Regressionsgeraden 82 lassen Rückschlüsse auf einen etwa vorhandenen Luftspalt oder einen Nebenschluss zu.

Das beispielhaft beschriebene Verfahren greift für die Auswertung der Messwerte teilweise auf die Methode der linearen Regression zurück. Dieser Algorithmus zeichnet sich durch kurze Rechenzeiten aus. Darüber hinaus könne jedoch andere Regressionsverfahren angewendet werden, ohne das erfindungsgemäße Verfahren zu verlassen.

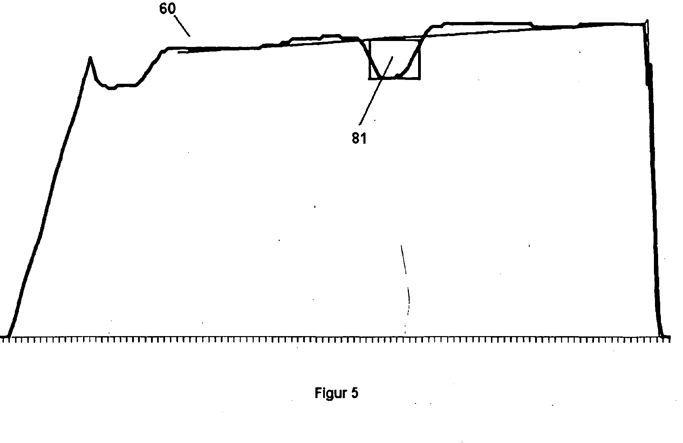

In gleicher kann zur Erkennung von Spritzerbildung während der Verschweißung die aufgezeichnete Kraftkurve untersucht werden (vgl. Figur 5).

Hierzu wird zunächst eine Regressionskurve der Kraftistwerte 60 zumindest über die zweite Hälfte der Schweißzeit berechnet. Sodann wird eine für eine Spritzerbildung charakteristische Ausprägung der Kraftistwerte über die Schweißzeit mit an sich bekannten Mustererkennungsverfahren innerhalb der zweiten Hälfte der Schweißzeit 88 gesucht. In Figur 5 liegt eine derartige Ausprägung vor. Die Fläche 81 zwischen der Regressionskurve und dem durch die Kraftistwerte 60 definierten Kurvenverlauf wird ermittelt. Die dabei ermittelte Fläche dient als Maßzahl, die mit mindestens einem Grenzwert verglichen wird.

### Bezugszeichenliste

| Nr. | Bezeichnung |
|---|---|
| | |
| 1. | Blechteile |
| 2. | Drehpunkt |
| 3.a,b | Elektrodenarm |
| 4.a,b | Stiftelektroden |
| 5.a,b | Elektrodenkappen |
| 6. | Elektromotor |
| 7. | Spindel |
| 8.a,b | Gelenke |
| 9. | Schweißtransformator |
| 10. | - |
| 11. | Schweißstromkabel |
| 12. | Schweißleistungsteil |
| 13. | Widerstandsschweiß-Steuerung |
| 14. | Motorkabel |
| 15. | Leistungsteil |
| 17. | Positionsistwert |
| 24. | Zangensteuerung |
| 25. | Positionsregelung |
| 27. | Schließphase |
| 30. | Schweißphase |
| 35. | Startsignal |
| 44. | Referenzbereich |
| 45. | Messbereich |
| 46. | Gerade |
| 47. | Gerade |
| 48. | Schwerpunkt |
| 49. | Schwerpunkt |
| 50. | Roboter-Steuerung |
| 60. | Kraftistwert |
| 61. | Elektrodenkraft |
| 63. | Kraftsensor |
| 64. | Elektrodenarmhalterung |
| 81. | Fläche |
| 82 | Regressionsgerade |
| 83 | Schweißlinsenerwärmung |
| 84 | Steigung |
| 85 | Bestimmtheitsmaß |
| 87 | Vorpresszeit |
| 88 | Schweißzeit |
| 89 | Nachpresszeit |
| 90 | - |
| 91-96 | gestrichelte Linien |

## Patentansprüche

1. Verfahren zum elektrischen Widerstandsschweißen sowie zur Beurteilung der Qualität einer Schweißverbindung von mindestens zwei Blechteilen (1) mittels einer Schweißvorrichtung mit gegeneinander beweglichen Elektroden (4a, 4b), einer elektrisch angetriebenen Spindel zum Bewegen mindestens einer der beiden Elektroden, mit Mitteln zum Erzeugen des Schweißstromes und einem an der Schweißzange angeordneten Kraftsensor (63) zur Erfassung eines Kraftistwertes zwischen den beiden Elektroden, einer Steuerung für die Schweißvorrichtung sowie einer Positionsregelung (25) für die elektrisch angetriebenen Spindel (6), wobei die Federkonstante der Schweißvorrichtung bestimmt und in der Steuerung (24) gespeichert wird **dadurch gekennzeichnet, dass**
- der Steuerung (24) ein Wert für eine Sollkraft zwischen den beiden Elektroden während der Schweißphase (30) vorgegeben wird,
- die erfassten Werte der Istkraft (60) zwischen den beiden Elektroden (4) fortlaufend mit dem Wert für die Sollkraft von der Steuerung (24) verglichen werden
- die Steuerung (24) unter Berücksichtigung der Federkonstante aus Abweichungen zwischen den fortlaufend erfassten Werten für die Istkraft (60) zu dem Wert für die Sollkraft einen Wert für eine geänderte Position der Spindel berechnet, um den Wert der Istkraft auf den Wert der Sollkraft als Führungsgröße nachzuregeln
- die berechneten Werte der geänderten Position als Führungsgröße der Positionsregelung (25) für die zu regelnden Positionsistwerte an der Spindel dienen
- und die berechneten Werte der geänderten Position oder die Positionsistwerte (17), nachfolgend als Positionswerte bezeichnet, zur Beurteilung der Qualität der Schweißverbindung ausgewertet werden.

2. Verfahren nach Anspruch 1, **dadurch gekennzeichnet, dass**
- die Federkonstante der Schweißvorrichtung bestimmt wird, indem nach Schließen beider Elektroden jedoch vor Beginn der Schweißphase die Istkraft zwischen den beiden Elektroden erhöht wird,
- ein erster Wert der Istkraft zwischen den Elektroden und der zu diesem ersten Wert zugehörige Positionsistwert der Spindel erfasst wird,
- anschließend mindestens ein weiterer, von dem ersten Wert verschiedener Wert der Istkraft zwischen den Elektroden und der zu diesem weiteren Wert zugehörige Positionsistwert der Spindel erfasst wird und
- aus den mindestens zwei Wertepaaren der Istkraft und des Positionsistwertes die Federkonstante ermittelt und in der Zangensteuerung zumindest bis zu einer erneuten Bestimmung der Federkonstanten der Schweißvorrichtung gespeichert wird.

3. Verfahren nach Anspruch 2, **dadurch gekennzeichnet, dass** die Federkonstante vor jeder Schweißphase (30) bestimmt wird.

4. Verfahren nach einem der Ansprüche 1 bis 3, **dadurch gekennzeichnet,**
- ein Referenzbereich (44) der erfassten Positionsistwerte (17) innerhalb der Schweißphase (30) festgelegt wird, der in der Vorpresszeit (87) der Schweißphase beginnt und längstens bis zur Aufschmelzung der zu verschweißenden Bleche andauert,
- ein auf den Referenzbereich (44) folgender Messbereich (45) festgelegt wird, der insbesondere vor Beendigung der Schweißzeit (88) beginnt und mit Ablauf der Nachpresszeit (89) endet und
- durch einen Vergleich der Positionswerte (17) des Referenzbereichs (44) und des Messbereichs (45) mit mindestens einem in der Steuerung (24) gespeicherten Grenzwert eine ausreichende Eindringtiefe der Elektroden während der Schweißphase (30) ermittelt wird.

5. Verfahren nach Anspruch 4, **dadurch gekennzeichnet, dass**
- für den Referenzbereich (44) und den Messbereich (45) eine lineare Regression zwischen den Positionswerten (17) und der Zeit berechnet wird, die jeweils eine Gerade (46, 47) für den Referenz (44)- und den Messbereich (45) ergibt
- die durch die Mitte der Geraden (46, 47) definierten Schwerpunkte (48, 49) für den Referenz (44) - und Messbereich (45) bestimmt werden und aus der Differenz zwischen den Schwerpunkten eine Maßzahl berechnet wird, die mit mindestens einem Grenzwert verglichen wird.

6. Verfahren nach einem der Ansprüche 1 bis 5, **dadurch gekennzeichnet, dass**
- zunächst eine Regressionskurve der Positionswerte (17) zumindest über die zweite Hälfte der Schweißzeit (88) berechnet wird,
- eine für eine Schweißlinsenerwärmung (83) charakteristische Ausprägung der Positionswerte (17) über die Schweißzeit mit an sich bekannten Mustererkennungsverfahren zumindest innerhalb der zweiten Hälfte der Schweißzeit (88) gesucht wird,
- sofern eine charakteristische Ausprägung aufgefunden wird, die Fläche zwischen der Regressionskurve (82) und dem durch die Positionswerte (17) definierten Kurvenverlauf im Bereich der charakteristischen Ausprägung ermittelt wird, wobei die Fläche als Maßzahl für die Schweißlinsenerwärmung (83) dient
- und zur Auswertung der Schweißlinsenerwärmung (83) diese Maßzahl mit mindestens einem Grenzwert verglichen wird.

7. Verfahren nach einem der Ansprüche 1 - 6, **dadurch gekennzeichnet, dass** zunächst eine lineare Regressionsgerade (82) der Positionswerte (17) zumindest über die zweite Hälfte der Schweißzeit (88) berechnet und das aus der linearen Regression berechnete Bestimmtheitsmaß (85) in die Auswertung mit einbezogen wird.

8. Verfahren nach einem der Ansprüche 1-7, **dadurch gekennzeichnet,**
- zunächst eine Regressionskurve der Kraftistwerte zumindest über die zweite Hälfte der Schweißzeit (88) berechnet wird,
- eine für eine Spritzerbildung charakteristische Ausprägung der Kraftistwerte über die Schweißzeit mit an sich bekannten Mustererkennungsverfahren zumindest innerhalb der zweiten Hälfte der Schweißzeit (88) gesucht wird,
- sofern eine charakteristische Ausprägung aufgefunden wird, die Fläche (81) zwischen der Regressionskurve und dem durch die Kraftistwerte (60) definierten Kurvenverlauf im Bereich der charakteristischen Ausprägung ermittelt wird, wobei die Fläche (81) als Maßzahl für die Spritzerbildung dient
- und zur Auswertung der Spritzerbildung diese Maßzahl mit mindestens einem Grenzwert verglichen wird.

9. Schweißvorrichtung mit mindestens zwei gegeneinander beweglichen Elektroden (4a, 4b), einer elektrisch angetriebenen Spindel zum Bewegen mindestens einer der beiden Elektroden, Mitteln zum Erzeugen des Schweißstromes, einem an der Schweißzange angeordneten Kraftsensor (63) zur Erfassung eines Kraftistwertes zwischen den beiden Elektroden, sowie einer Positionsregelung (25) für die elektrisch angetriebenen Spindel (6) sowie einer Steuerung (24), die zur Ausführung folgender Schritte ausgebildet ist:
- die Federkonstante der Schweißvorrichtung wird in der Steuerung (24) gespeichert
- die Steuerung vergleicht die erfassten Werte der Istkraft (60) zwischen den beiden Elektroden (4) fortlaufend mit dem Wert für die Sollkraft, wobei der Steuerung (24) ein Wert für die Sollkraft zwischen den beiden Elektroden während der Schweißphase (30) vorgegeben wird,
- die Steuerung (24) berechnet unter Berücksichtigung der Federkonstante aus Abweichungen zwischen den fortlaufend erfassten Werten für die Istkraft (60) zu dem Wert für die Sollkraft einen Wert für eine geänderte Position der Spindel, um den Wert der Istkraft auf den Wert der Sollkraft als Führungsgröße nachzuregeln, wobei die berechneten Werte der geänderten Position als Führungsgröße der Positionsregelung (25) für die zu regelnden Positionsistwerte an der Spindel dienen
- und in der Steuerung werden die berechneten Werte der geänderten Position oder die Positionsistwerte (17), nachfolgend als Positionswerte bezeichnet, gespeichert und zur Beurteilung der Qualität der Schweißverbindung ausgewertet.

10. Schweißvorrichtung nach Anspruch 9, **dadurch gekennzeichnet, dass** es sich um eine Schweißzange oder eine Schweißpresse handelt.

## Claims

1. Method for electrical resistance welding and for assessing the quality of a welded joint of at least two sheet metal parts (1) by means of a welding apparatus with electrodes (4a, 4b), which are movable with respect to each other, an electrically driven spindle for moving at least one of the two electrodes, with means for generating the welding current and a force sensor (63) for detecting an actual force value between the two electrodes, which force sensor is arranged on the electrode holder, a controller for the welding apparatus and a position regulator (25) for the electrically driven spindle (6), the spring constant of the welding apparatus being determined and stored in the controller (24), **characterised in that**
- a value for a setpoint force between the two electrodes during the welding phase (30) is preset in the controller (24),
- the detected values for the actual force (60) between the two electrodes (4) are continuously compared with the value for the setpoint force by the controller (24)
- the controller (24) calculates a value for a changed position of the spindle from deviations between the continuously detected values for the actual force (60) and the value for the setpoint force, taking into account the spring constant, in order to adjust the value for the actual force to the value for the setpoint force as a reference variable
- the calculated values of the changed position are used as a reference variable of the position regulator (25) for the actual position values to be regulated at the spindle
- and the calculated values of the changed position or the actual position values (17), referred to below as position values, are evaluated in order to assess the quality of the welded joint.

2. Method according to Claim 1, **characterised in that**
- the spring constant of the welding apparatus is determined by the actual force between the two electrodes being increased after both electrodes have been closed but before the start of the welding phase,
- a first value for the actual force between the electrodes and the actual position value of the spindle, which value is associated with this first value, is detected,
- then at least one further value for the actual force between the electrodes and the actual position value of the spindle associated with this further value is detected, which further value is different from the first value, and
- the spring constant is determined from the at least two pairs of values for the actual force and the actual position value and is stored in the electrode holder controller at least until a new spring constant of the welding apparatus is determined.

3. Method according to Claim 2, **characterised in that** the spring constant is determined before each welding phase (30).

4. Method according to one of Claims 1 to 3,
**characterised in that**
- a reference range (44) of the detected actual position values (17) within the welding phase (30) is set, which reference range begins in the preheat pressure time (87) of the welding phase and lasts at the longest until the metal sheets to be welded have fused,
- a measuring range (45) is set, which follows the reference range (44) and begins in particular before the end of the welding time (88) and ends when the post-heat pressure time (89) ends, and
- a sufficient penetration depth of the electrodes during the welding phase (30) is determined by means of a comparison of the position values (17) of the reference range (44) and of the measurement range (45) with at least one limit value which is stored in the controller (24).

5. Method according to Claim 4, **characterised in that**
- a linear regression between the position values (17) and the time is calculated for the reference range (44) and the measurement range (45), which linear regression in each case gives a straight line (46, 47) for the reference range (44) and the measurement range (45)
- the median points (48, 49) for the reference range (44) and the measurement range (45) defined by the centre of the straight lines (46, 47) are determined, and a measured value is calculated from the difference between the median points, which measured value is compared with at least one limit value.

6. Method according to one of Claims 1 to 5, **characterised in that**
- firstly, one regression curve of the position values (17) is calculated at least over the second half of the welding time (88),
- a form of the position values (17) which is characteristic for spot weld heating (83) is sought over the welding time with a pattern recognition method which is known per se, at least within the second half of the welding time (88),
- if a characteristic form is found, the area is determined between the regression curve (82) and the curve profile defined by the position values (17) in the range of the characteristic form, the area being used as a measured value for the spot weld heating (83)
- and this measured value is compared with at least one limit value in order to evaluate the spot weld heating (83).

7. Method according to one of Claims 1 - 6, **characterised in that** firstly a linear regression line (82) of the position values (17) is calculated, at least over the second half of the welding time (88), and the coefficient of determination (85) calculated from the linear regression is included in the evaluation.

8. Method according to one of Claims 1 - 7, **characterised in that**
- firstly, a regression curve of the actual force values is calculated at least over the second half of the welding time (88),
- a form of the actual force values which is characteristic of spatter formation is sought over the welding time with a pattern recognition method which is known per se, at least within the second half of the welding time (88),
- if a characteristic form is found, the area (81) is determined between the regression curve and the curve profile defined by the actual force values (60) in the range of the characteristic form, the area (81) being used as a measured value for the spatter formation
- and this measured value is compared with at least one limit value in order to evaluate the spatter formation.

9. Welding apparatus with at least two electrodes (4a, 4b), which can be moved towards each other, an electrically driven spindle for moving at least one of the two electrodes, means for generating the welding current, a force sensor (63) for detecting an actual force value between the two electrodes, which force sensor is arranged on the electrode holder, and a position regulator (25) for the electrically driven spindle (6), as well as a controller (24) which is configured to execute the following steps:
- the spring constant of the welding apparatus is stored in the controller (24)
- the controller compares the detected values for the actual force (60) between the two electrodes (4) continuously with the value for the setpoint force, a value for the setpoint force between the two electrodes during the welding phase (30) being preset in the controller (24),
- the controller (24) calculates a value for a changed position of the spindle from deviations between the continuously detected values for the actual force (60) and the value for the setpoint force, taking into account the spring constant, in order to adjust the value for the actual force to the value for the setpoint force as a reference variable, the calculated values of the changed position being used as a reference variable of the position regulator (25) for the actual position values to be regulated at the spindle
- and the calculated values of the changed position or the actual position values (17), referred to below as position values, are stored in the controller and evaluated in order to assess the quality of the welded joint.

10. Welding apparatus according to Claim 9, **characterised in that** it is an electrode holder or a combined spot welding and press-forming machine.

## Revendications

1. Procédé de soudage électrique par résistance, ainsi que d'évaluation de la qualité d'un assemblage par soudure d'au moins deux pièces en tôle (1) au moyen d'un dispositif de soudage, avec des électrodes (4a, 4b) mobiles l'une vers l'autre, une broche à entraînement électrique pour déplacer au moins l'une des deux électrodes, avec des moyens pour générer le courant de soudage et avec un capteur de force (63) disposé sur la pince porte-électrodes pour détecter une valeur réelle de force entre les deux électrodes, une commande pour le dispositif de soudage, ainsi qu'un réglage de position (25) pour la broche (6) à entraînement électrique, la constante de rappel du dispositif de soudage étant déterminée et mémorisée dans la commande (24), **caractérisé en ce que**
- il est prédéfini pour la commande (24) une valeur pour une force de consigne entre les deux électrodes pendant la phase de soudage (30),
- les valeurs détectées pour la force réelle (60) entre les deux électrodes (4) sont comparées en permanence avec la valeur pour la force de consigne par la commande (24)
- en tenant compte de la constante de rappel, la commande (24) calcule à partir d'écarts entre les valeurs détectées en permanence pour la force réelle (60) et la valeur pour la force de consigne une valeur pour une position modifiée de la broche, pour réajuster la valeur de la force réelle à la valeur de la force de consigne en tant que grandeur de référence,
- les valeurs calculées pour la position modifiée en tant que grandeur de référence du réglage de position (25) servent pour les valeurs réelles de position à régler sur la broche,
- et les valeurs calculées pour la position modifiée ou les valeurs réelles de position (17), ci-dessous appelées valeurs de position, sont interprétées pour l'estimation de la qualité de l'assemblage par soudure.

2. Procédé selon la revendication 1, **caractérisé en ce que**
- la constante de rappel du dispositif de soudage est déterminée, **en ce qu'**après la fermeture des deux électrodes, mais avant le début de la phase de soudage, la force réelle est augmentée entre les électrodes,
- une première valeur est détectée pour la force réelle entre les électrodes et la valeur réelle de position de la broche correspondant à ladite première valeur,
- **en ce qu'**ensuite au moins une valeur supplémentaire pour la force réelle, différente de la première valeur est détectée entre les électrodes et **en ce que** la valeur réelle de position de la broche correspondant à ladite valeur supplémentaire est détectée et,
- à partir des au moins deux paires de valeurs de la force réelle et de la valeur réelle de position, la constante de rappel est déterminée et mémorisée dans la commande de la pince, au moins jusqu'à une nouvelle détermination des constantes de rappel du dispositif de soudage.

3. Procédé selon la revendication 2, **caractérisé en ce que** la constante de rappel est déterminée avant chaque phase de soudage (30).

4. Procédé selon l'une quelconque des revendications 1 à 3, **caractérisé en ce que,**
- une plage de référence (44) est fixée dans la phase de soudage (30) pour les valeurs réelles de position (17) détectées, laquelle commence pendant le temps de précompression (87) de la phase de soudage et dure au maximum jusqu'à la fusion des tôles à souder,
- une plage de mesure (45) successive à la plage de référence (44) est fixée, laquelle commence notamment avant l'achèvement du temps de soudage (88) et prend fin avec l'écoulement du temps de post-compression (89) et
- par une comparaison des valeurs de position (17) de la plage de référence (44) et de la plage de mesure (45), avec au moins une valeur limite mémorisée dans la commande (24), il est déterminé une profondeur de pénétration suffisante des électrodes pendant la phase de soudage (30).

5. Procédé selon la revendication 4, **caractérisé en ce que** - pour la plage de référence (44) et la plage de mesure (45), il est calculé une régression linéaire entre les valeurs de position (17) et le temps, dont il résulte chaque fois une droite (46, 47) pour la plage de référence (44) et la plage de mesure (45),
- **en ce que** les barycentres (48, 49) définis par le centre des droites (46, 47) sont déterminés pour la plage de référence (44) et la plage de mesure (45) et **en ce qu'**à partir de la différence entre les barycentres, il est calculé une cote dimensionnelle, qui est comparée avec au mois une valeur limite.

6. Procédé selon l'une quelconque des revendications 1 à 5, **caractérisé en ce que**
- une courbe de régression des valeurs de position (17) est d'abord calculée au moins sur la deuxième moitié du temps de soudage (88),
- il est cherché au moins dans la deuxième moitié du temps de soudage (88) une extension des valeurs de position (17) sur le temps de soudage, caractéristique de l'échauffement du noyau de soudure (83) avec des procédés de reconnaissance des formes connus en soi (88)
- s'il est trouvé une extension caractéristique, la surface entre à courbe de régression (82) et le trajet de la courbe défini par les valeurs de position (17) est déterminé dans la plage de l'extension caractéristique, la surface servant de cote dimensionnelle pour l'échauffement du noyau de soudure (83) - et pour l'évaluation de l'échauffement du noyau de soudure (83), cette cote dimensionnelle est comparée avec au moins une valeur limite.

7. Procédé selon l'une quelconque des revendications 1 à 6, **caractérisé en ce qu'**il est calculé d'abord une droite de régression linéaire (82) des valeurs de position (17) au moins sur la deuxième moitié du temps de soudage (88) et la cote de précision (85) calculée à partir de la régression linéaire est co-impliquée dans l'évaluation.

8. Procédé selon l'une quelconque des revendications 1 à 7, **caractérisé en ce que,**
- une courbe de régression des valeurs réelles de force est d'abord calculée au moins sur la deuxième moitié du temps de soudage (88),
- il est cherché au moins dans la deuxième moitié du temps de soudage (88) une extension des valeurs réelles de force, caractéristique d'une formation de projections sur le temps de soudage avec des procédés de reconnaissance des formes connus en soi,
- et s'il est trouvé une extension caractéristique, la surface (81) entre la courbe de régression et le trajet de la courbe défini par les valeurs réelles de position (60) est déterminé dans la plage de l'extension caractéristique, la surface (81) servant de cote dimensionnelle pour la formation de projections
- et pour l'évaluation de la formation de projections, cette cote dimensionnelle est comparée avec au moins une valeur limite.

9. Dispositif de soudage avec au moins deux électrodes (4a, 4b) mobiles l'une vers l'autre, une broche à entraînement électrique pour déplacer au moins l'une des deux électrodes, avec des moyens pour générer le courant de soudage, un capteur de force (63) disposé sur la pince porte-électrodes pour détecter une valeur réelle de force entre les deux électrodes, ainsi qu'un réglage de position (25) pour la broche (6) à entraînement électrique, ainsi qu'une commande (24), qui est conçue pour la mise en oeuvre des étapes suivantes :
- la constante de rappel du dispositif de soudage est mémorisée dans la commande (24)
- la commande compare en permanence les valeurs détectées de la force réelle (60) entre les deux électrodes (4) avec la valeur pour la force de consigne, une valeur étant prescrite par la commande (24) pour la force de consigne entre les deux électrodes pendant la phase de soudage (30),
- en tenant compte de la constante de rappel, la commande (24) calcule à partir d'écarts entre les valeurs détectées en permanence pour la force réelle (60) et la valeur pour la force de consigne une valeur pour une position modifiée de la broche, pour réajuster la valeur de la force réelle à la valeur de la force de consigne en tant que grandeur de référence, les valeurs calculées pour la position modifiée servant de grandeur de référence du réglage de position (25) pour les valeurs réelles de position à régler sur la broche
- et les valeurs calculées pour la position modifiée ou les valeurs de position réelle (17), ci-dessous appelées valeurs de position, sont mémorisées dans la commande et interprétées pour l'estimation de la qualité de l'assemblage par soudure.

10. Dispositif de soudage selon la revendication 9, **caractérisé en ce qu'**il s'agit d'une pince porte-électrodes ou d'une presse à souder.
